# EUROPÄISCHE PATENTSCHRIFT

(11) **EP 1 947 536 B1**
(45) Veröffentlichungstag und Bekanntmachung des Hinweises auf die Patenterteilung: **30.12.2009**
(21) Anmeldenummer: 07001346.1
(22) Anmeldetag: 22.01.2007
(51) Int. Cl.: G05B 19/05, G05B 19/042, G06F 9/30, G06F 9/45

(54) **Verfahren zur Konfigurationsänderung eines laufenden Automatisierungsgerätes**
Configuration update method for a working automation device
Méthode pour modifier la configuration d'un système d'automatisation en fonctionnement

(43) Veröffentlichungstag der Anmeldung: 23.07.2008
(73) Patentinhaber: SIEMENS AKTIENGESELLSCHAFT, 80333 München (DE)
(72) Erfinder: Graf, Herbert, 76744 Wörth (DE); Kohl, Herbert, 76764 Rheinzabern (DE); Pohlan, Rudolf, 76337 Waldbronn (DE)

(56) Entgegenhaltungen:
- EP-A2- 0 604 002
- DE-A1- 10 041 072
- US-A- 5 339 436
- ANDREW S. TANENBAUM: "Moderne Betriebsysteme" 2003, PEARSON STUDIUM , MUNICH , XP002441843 ISBN: 3-8273-7019-1 * Seiten 216-217, Absatz 4.2 *

## Beschreibung

Die vorliegende Erfindung betrifft ein Verfahren zum Betrieb eines zur Ausführung eines im Folgenden als Steuerungsprogramm bezeichneten Gesamt- oder Anwendersteuerungsprogramms (Resource gemäß IEC 61131-3 Standard) vorgesehenen Automatisierungsgerätes. Das Steuerungsprogramm umfasst dabei als Programmelemente, also Organisationseinheiten für (ereignisgesteuerte) Aufgaben, zumindest Automatisierungsfunktionen, insbesondere Programme entsprechend der Definition im IEC 61131-3 Standard, sowie eine im Folgenden kurz als Ablauffolgenbeschreibung bezeichnete Programmablauffolgenbeschreibung, die eine Ablauf- oder Aufrufreihenfolge der Automatisierungsfunktionen beschreibt oder festlegt.

Solche Betriebsverfahren sowie nach dem Betriebsverfahren arbeitende Automatisierungsgeräte sind allgemein bekannt, z. B. in Form der von der Anmelderin unter der Marke SIMATIC angebotenen Automatisierungsgeräte. Insbesondere handelt es sich bei den hier und im Folgenden allgemein als Automatisierungsgerät bezeichneten Geräten um so genannte speicherprogrammierbare Steuerungen, insbesondere um so genannte Zentraleinheiten solcher speicherprogrammierbarer Steuerungen.

Solche Automatisierungsgeräte sind bekanntlich zur Steuerung und/oder Überwachung technischer Prozesse vorgesehen. Dabei übernehmen sie insbesondere Steuerungs- und Regelungsaufgaben sowie weitere leittechnische Funktionen wie Messen, Melden, Bedienen und Beobachten, Diagnose, etc.

Automatisierungsgeräte der eingangs genannten Art weisen ein so genanntes Laufzeitsystem auf, das funktional gleichsam zwischen dem jeweiligen Steuerungsprogramm und einem von dem Automatisierungsgerät umfassten Betriebssystem angeordnet ist und vom Steuerungsprogramm benötigte Grundfunktionen, wie z. B. lesende oder schreibende Zugriffe auf an das Automatisierungsgerät anschließbare Peripheriegeräte, zur Verfügung stellt. In Bezug auf das Laufzeitsystem besteht ein ständiger Bedarf, dieses dahin gehend zu optimieren, dass eine Laufzeiteffizienz auf der einen Seite und ein Änderungsmanagement auf der anderen Seite möglichst gut in Einklang gebracht sind. Bei der Steuerung und/oder Überwachung von technischen Prozessen, insbesondere bei kontinuierlichen verfahrenstechnischen Prozessen, besteht eine besondere Anforderung in der Änderbarkeit der Steuerungsprogramme ohne "Gedächtnisverlust" der aktuellen Steuerungsdaten im laufenden Betrieb der Anlage. Diese Problemstellung trifft insbesondere bei Engineering-Systemen unter Verwendung von Programmiersprachen wie Continuous Function Chart (CFC) und Sequential Function Chart (SFC) zu, die besonders bevorzugt zur Automatisierung kontinuierlicher verfahrenstechnischer Prozesse eingesetzt werden.

Derzeit sind die Möglichkeiten einer echten Optimierung des Laufzeitsystems, wie oben skizziert, begrenzt, nachdem herkömmliche Laufzeitsysteme von Automatisierungsgeräten entweder interpretativen Code oder Maschinencode ausführen. Die interpretativ arbeitenden Systeme unterstützen dabei in der Regel ein Änderungsmanagement während das jeweilige Steuerungsprogramm ausgeführt wird (Betriebszustand "RUN"). Wesentlicher Nachteil der nach diesem Prinzip arbeitenden Automatisierungsgeräte ist die geringe Laufzeiteffizienz. Automatisierungsgeräte, die Steuerungsprogramme in Maschinencode ausführen, unterstützen ein Änderungsmanagement entweder gar nicht oder nur eingeschränkt. Diesem Nachteil steht allerdings eine optimale Laufzeiteffizienz gegenüber.

Aus der US 5,339,436 ist bekannt, dass aus interpretativem Code, z. B. Programmcode in der Programmiersprache BASIC, kompilierter Code, also z. B. Code, der aus einer Umsetzung von ursprünglich z. B. in der Programmiersprache C formulierten Programmanweisungen resultiert, aufgerufen werden kann. Die kompilierten Funktionen werden nach Art einer Bibliothek verwendet, wobei, wenn sich die Bibliothek im Hinblick auf Art und Umfang der davon umfassten Funktionen ändert, die Aufrufe in dem interpretativen Code angepasst werden, was durch einen Vorverarbeitungsschritt erfassbar sein soll.

Eine Aufgabe der Erfindung besteht entsprechend darin, ein Verfahren zum Betrieb eines Automatisierungsgerätes vorzuschlagen, mit dem die o.g. Nachteile überwunden oder zumindest hinsichtlich ihrer Auswirkungen reduziert werden.

Dazu ist bei einem Verfahren zum Betrieb eines Automatisierungsgerätes der o.g. Art vorgesehen, dass eine Auswertung und Umsetzung der Ablauffolgenbeschreibung in eine für eine Verarbeitungseinheit des Automatisierungsgerätes verarbeitbare Form während der Laufzeit des Steuerungsprogramms durch einen Laufzeitinterpreter erfolgt.

Es wird also der Abarbeitung der einzelnen Automatisierungsfunktionen ein Systemprogramm gleichsam vorgeschaltet, so dass es gelingt, die Kontrolle über die Abläufe der einzelnen Automatisierungsfunktionen zu gewinnen. Der Begriff "Automatisierungsfunktion" wird dabei hier und im Folgenden zusammenfassend für die durch die Verarbeitungseinheit, also einem Prozessor oder dergleichen, des Automatisierungsgerätes ausführbaren Programmbestandteile, wie z. B. Tasks, Operations- und Funktionsbausteine, Alarm- oder Interruptbehandlungsroutinen, Unterprogramme etc. verwendet. Der Begriff "Automatisierungsfunktion" ist insbesondere im Sinne und gemäß des Begriffes "Program" (engl.) der Norm IEC 61131-3 zu verstehen. Nachdem unter Kontrolle durch den Laufzeitinterpreter eine Automatisierungsfunktion, also z. B. eine Task, gestartet wurde, insbesondere aufgrund eines entsprechenden Startereignisses für eine solche Task, geht die Kontrolle der Abarbeitung der Automatisierungsfunktion vollständig auf den Laufzeitinterpreter über. Vorteilhaft ist dabei die Nutzung der bisher auch von dem Automatisierungsgerät umfassten Betriebsmittel ohne spezielle Erweiterungen oder Änderungen. Das Laden des Laufzeitinterpreters in einen Speicher des Automatisierungsgerätes kann von einem Engineering-System, mit dem auch das Steuerungsprogramm erstellbar ist, mit Hilfe von Standarddiensten, also genau solchen Betriebsmitteln, die auch für das Steuerungsprogramm zur Verfügung stehen, durchgeführt werden. Das sich unter Einbeziehung des Laufzeitinterpreters ergebende Laufzeitsystem des Automatisierungsgerätes stellt damit gleichsam ein "Hybridlaufzeitsystem" dar, welches als aus einem Basislaufzeitsystem und dem gleichsam darüber liegenden Laufzeitinterpreter bestehend aufgefasst werden kann. Der Laufzeitinterpreter kann allerdings genauso als Komponente im Basislaufzeitsystem, dort insbesondere als Firmware, integriert sein. Laufzeitinterpreter und Basislaufzeitsystem sind also Bestandteil des Systemprogramms des Automatisierungsgerätes.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn im Zusammenhang mit einer Änderung des Steuerungsprogramms von der Änderung betroffene Programmelemente, also Automatisierungsfunktionen und ggf. die oder jede Ablauffolgenbeschreibung, neben entsprechenden bisherigen Programmelementen in einem für das Automatisierungsgerät erreichbaren Speicher, insbesondere einem von dem Automatisierungsgerät umfassten Speicher, hinterlegt werden und eine Umschaltung zur zukünftigen Verwendung der von der Änderung betroffenen Programmelemente bei der Ausführung des Steuerungsprogramms erst erfolgt, wenn sämtliche von der Änderung betroffenen Programmelemente im Speicher vorliegen, kann im Speicher gleichzeitig ein momentan ausgeführtes Steuerungsprogramm mit den davon umfassten Programmelementen und ein geändertes Steuerungsprogramm, insbesondere die von der Änderung betroffenen Programmelemente, vorgehalten werden. Wenn die Umschaltung zur zukünftigen Verwendung der von der Änderung betroffenen Programmelemente erst erfolgt, wenn sämtliche von der Änderung betroffenen Programmelemente im Speicher vorliegen, kann der Übergang vom momentanen Steuerungsprogramm zum geänderten Steuerungsprogramm sehr schnell erfolgen, ggf. sogar so schnell, dass dadurch die Steuerung und/oder Überwachung des jeweiligen technischen Prozesses nicht unterbrochen wird.

Ein solcher Umschaltvorgang im laufenden Betrieb wird auch als "Hot Swapping" bezeichnet. Die Vorteile einer solchen schnellen Umschaltbarkeit liegen auf der Hand. Insbesondere werden kostenträchtige Stillstandszeiten des technischen Prozesses vermieden, die sich, wenn dazu ein Herunterfahren des technischen Prozesses oder ein Überführen desselben in einen sicheren Zustand erforderlich ist, schnell zu Zeitspannen addieren können, die für den jeweiligen Betreiber des technischen Prozesses aus Kostengründen unerwünscht sind. Bevorzugt besteht die Umschaltung zur zukünftigen Verwendung der von der Änderung betroffenen Programmelemente in der Verwendung einer die von der Änderung betroffenen Automatisierungsfunktionen referenzierenden Ablauffolgenbeschreibung durch den Laufzeitinterpreter. D. h., mit der Änderung des Steuerungsprogramms wird auch eine Ablauffolgenbeschreibung in den Speicher transferiert, die nach der Umschaltung die bisherige Ablauffolgenbeschreibung ersetzt und die im Gegensatz zu der bisherigen Ablauffolgenbeschreibung, die ausschließlich Programmelemente des bisherigen Steuerungsprogramms referenziert, neben eventuell unverändert gebliebenen Programmelementen des bisherigen Steuerungsprogramms zumindest die von der Änderung betroffenen Automatisierungsfunktionen referenziert. Durch eine solche Bereitstellung einer aktualisierten Ablauffolgenbeschreibung kann die Umschaltung auf das geänderte Steuerungsprogramm mit der gewünschten Schnelligkeit erfolgen. Eine Umschaltung kann z. B. so erfolgen, dass die zum momentanen, durch die Änderung zu ersetzenden Steuerungsprogramm gehörige Ablauffolgenbeschreibung, wenn dadurch eine Zyklizität der von dem Steuerungsprogramm umfassten Automatisierungsfunktionen definiert wird, bis zu einem Punkt abgearbeitet wird, nach dem die Abarbeitung wiederholt wird. Im anschließenden Zyklus wird dann bereits die aktualisierte Ablauffolgenbeschreibung verwendet. Ansonsten kann die Abarbeitung der bisherigen Ablauffolgenbeschreibung an dafür vorgesehenen Punkten unterbrochen und an entsprechenden Punkten der neuen Ablauffolgenbeschreibung fortgesetzt werden.

Besonders bevorzugt ist vorgesehen, dass im Zusammenhang mit der Änderung des Steuerungsprogramms Instanzdaten des oder jedes Programmelementes gesichert werden und die gesicherten Instanzdaten nach der Umschaltung der Ausführung des Steuerungsprogramms zugrunde gelegt werden. Der Begriff "Instanzdaten" wird hier und im Folgenden als Oberbegriff für sämtliche Daten, wie z. B. Variable und dergleichen, verwendet, die von einem Programmelement des Steuerungsprogramms benutzt oder verändert werden. Durch Sicherung solcher Instanzdaten und Verwendung derselben nach der oben beschriebenen Umschaltung ist sichergestellt, dass das geänderte Steuerungsprogramm unmittelbar Zugriff auf einen vollständigen und aktuellen Datenbestand hat, so dass durch diese Maßnahme eine schnelle Umschaltbarkeit von einem momentanen Steuerungsprogramm zu einem geänderten Steuerungsprogramm, ohne dass dafür die Steuerung und/oder Überwachung des jeweiligen technischen Prozesses (merklich) unterbrochen wird, noch weiter befördert wird.

Wenn nach dem Hinterlegen von von der Änderung betroffenen Programmelementen und vor der Umschaltung eine Benutzereingabe abgewartet wird, kann die Umschaltung durch einen erfahrenen Bediener initiiert werden, so dass für eine Umschaltung z. B. ein sicherer oder unkritischer Zustand des technischen Prozesses abgewartet werden kann.

Wenn nach der Umschaltung aufgrund einer entsprechenden Benutzereingabe eine Rückkehr zur Verwendung der ursprünglichen Automatisierungsfunktionen durch Verwendung der die ursprünglichen Automatisierungsfunktionen referenzierenden Ablauffolgenbeschreibung durch den Laufzeitinterpreter erfolgt, ist durch manuellen Eingriff eines Bedieners jederzeit eine Rückkehr zum bisher durch das Automatisierungsgerät ausgeführten Steuerungsprogramm möglich. Dies ist insbesondere dann sinnvoll und wünschenswert, wenn sich bei der Ausführung des geänderten Steuerungsprogramms Fehlfunktionen einstellen oder das Verhalten des technischen Prozesses unter Kontrolle des bisherigen Steuerungsprogramms mit dem entsprechenden Verhalten des technischen Prozesses unter Kontrolle des geänderten Steuerungsprogramms verglichen werden soll.

Das Betriebsverfahren, insbesondere der Laufzeitinterpreter, ist in Software ausgeführt, so dass die Erfindung auch ein Computerprogramm mit durch einen Computer, insbesondere die Verarbeitungseinheit des Automatisierungsgerätes, ausführbaren Programmcodeanweisungen zur Implementation des Verfahrens, insbesondere zur Implementation des Laufzeitinterpreters, umfasst. Des Weiteren umfasst die Erfindung auch ein Computerprogrammprodukt, insbesondere ein Speichermedium oder dergleichen, mit einem solchen Computerprogramm.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

Darin zeigen
- FIG 1: ein im Stand der Technik bekanntes Automatisierungsgerät und
- FIG 2: ein zur Ausführung des erfindungsgemäßen Verfahrens vorgesehenes Automatisierungsgerät.

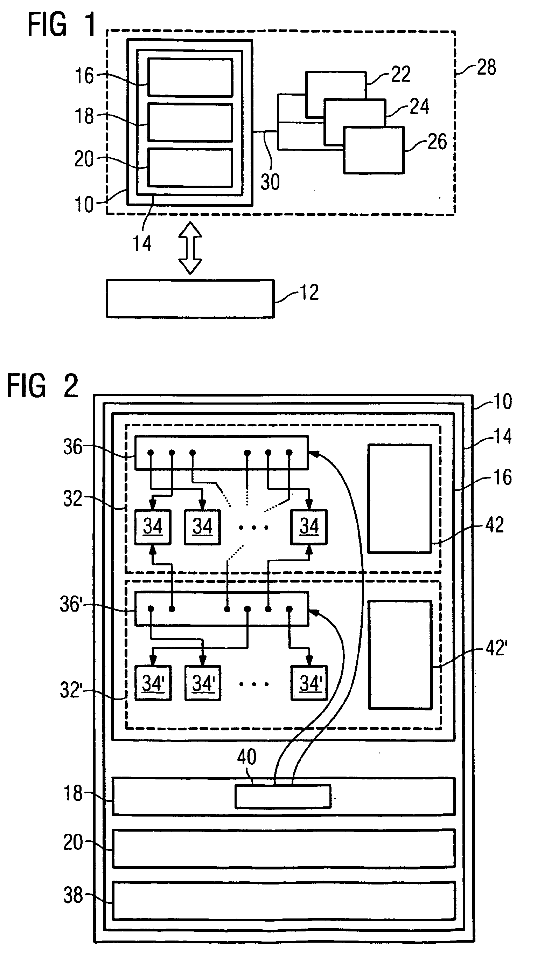

FIG 1 zeigt in schematisch vereinfachter Darstellung ein im Stand der Technik bekanntes Automatisierungsgerät 10 zur Steuerung und/oder Überwachung eines nicht näher dargestellten technischen Prozesses 12. Das Automatisierungsgerät 10 umfasst einen Speicher 14, in dem ein Steuerungsprogramm 16, ein Laufzeitsystem 18 und ein Betriebssystem 20 hinterlegt sind. Das Automatisierungsgerät 10 kann mit anderen, nicht notwendig identischen Automatisierungsgeräten 22, 24, 26 zu einem im IEC 61131-3 Standard als "Configuration" bezeichneten Automatisierungssystem 28 zusammengefasst werden, wobei dazu die Automatisierungsgeräte 10, 22, 24, 26 in an sich bekannter Art kommunikativ, z. B. über einen Bus 30, verbunden sind.

FIG 2 zeigt das Automatisierungsgerät 10 gemäß FIG 1 in einer zur Ausführung des erfindungsgemäßen Verfahrens vorgesehenen Ausgestaltung. Dargestellt ist, dass das Steuerungsprogramm 16 als Programmelemente 32 Automatisierungsfunktionen 34 umfasst. Zur Definition einer Ablaufreihenfolge der Automatisierungsfunktionen 34 ist eine Ablauffolgenbeschreibung 36 vorgesehen. Durch die Pfeile ausgehend von der Ablauffolgenbeschreibung 36 zu einzelnen Automatisierungsfunktionen 34 soll verdeutlicht werden, dass die Ablauffolgenbeschreibung 36 die Ablauffolge der Automatisierungsfunktionen 34 abschließend beschreibt. Gemäß der Erfindung ist vorgesehen, dass eine Auswertung und Umsetzung der Ablauffolgenbeschreibung 36 in eine für eine Verarbeitungseinheit 38, insbesondere einen Prozessor oder dergleichen, des Automatisierungsgerätes 10 verarbeitbare Form durch einen Laufzeitinterpreter 40 erfolgt.

Für das Betriebsverfahren gemäß der Erfindung liegen die einzelnen Automatisierungsfunktionen 34 in einem Maschinencode, also in einem für die Verarbeitungseinheit 38 direkt umsetzbaren Code, vor. Die Umsetzung der Ablauffolgenbeschreibung 36 in einen für die Verarbeitungseinheit 38 ausführbaren Code erfolgt dagegen interpretativ, und zwar durch den Laufzeitinterpreter 40. Das dem damit als Interpreter-Compiler-Modell beschreibbare Betriebsverfahren trennt bewusst an der Grenze zu den einzelnen Automatisierungsfunktionen 34 interpretativen Code, also Code innerhalb der Ablauffolgenbeschreibung 36, von kompiliertem Code, also Code innerhalb der Automatisierungsfunktionen 34. Automatisierungsfunktionen 34 sind in diesem Programmiermodell Granulate, die in angemessener Zeit kompilierbar und im Rahmen des Änderungsmanagements noch handhabbar sind, aber selbst nicht interpretativ abgearbeitet werden dürfen, um eine schlechte Laufzeiteffizienz zu vermeiden. Zu starken Laufzeitverschlechterungen kommt es nämlich gerade, wenn Elementaroperationen wie Logikfunktionen oder Funktionsaufrufe mit einer komplexen Schnittstellenversorgung interpretativ ausgeführt werden. Die Laufzeiteffizienz wird bei rein interpretativen Ansätzen geopfert. Dieser wesentliche Nachteil wird mit dem Ansatz gemäß der Erfindung, also dem kombinierten Laufzeitsystem, umgangen.

Der besondere Vorteil der Erfindung kommt dann zum Tragen, wenn es darum geht, im Zusammenhang mit einer Änderung des Steuerungsprogramms 16 von der Änderung betroffene Programmelemente 32 zur Ausführung zu bringen. Dazu sind im Folgenden von Änderungen betroffene Elemente mit Bezugszeichen 32', 34' und 36' bezeichnet. Geänderte Programmelemente 32' werden neben bisherigen Programmelementen 32 in den Speicher 14 geladen. Exemplarisch sind als geänderte Programmelemente 32' eine Anzahl geänderter Automatisierungsfunktionen 34' dargestellt. Darüber hinaus umfassen die geänderten Programmelemente 32' auch eine geänderte Ablauffolgenbeschreibung 36'. Die geänderte Ablauffolgenbeschreibung 36' referenziert zumindest die von der Änderung betroffenen Automatisierungsfunktionen 34'. Wie die Darstellung deutlich zu machen sucht, referenziert die geänderte Ablauffolgenbeschreibung 36' die von der Änderung betroffenen Automatisierungsfunktionen 34' und daneben zumindest teilweise auch Automatisierungsfunktionen 34, die zu den Programmelementen 32 des bisherigen Steuerungsprogramms 16 gehören. Eine Umschaltung vom bisherigen Steuerungsprogramm 16, also dem Steuerungsprogramm 16 mit Programmelementen 32, die vor der Änderung des Steuerungsprogramms 16 der Steuerung und/oder Überwachung des technischen Prozesses 12 (FIG 1) zugrunde gelegt wurden, zu dem geänderten Steuerungsprogramm 16 mit entsprechend geänderten Programmelementen 32' kann durch Verwendung der die von der Änderung betroffenen Automatisierungsfunktionen 34' referenzierenden Ablauffolgenbeschreibung 36' anstelle der bisherigen Ablauffolgenbeschreibung 36 erfolgen. Die Umschaltung von der Verwendung der bisherigen Ablauffolgenbeschreibung 36 zu der geänderten Ablauffolgenbeschreibung 36' erfolgt, wenn im Zusammenhang mit der Änderung des Steuerungsprogramms 16 alle geänderten Programmelemente 32' in den Speicher 14 übertragen wurden.

Zusätzlich kann vorgesehen sein, dass im Zusammenhang mit der Änderung des Steuerungsprogramms 16 Instanzdaten 42 des oder jedes Programmelementes 32 der bisherigen Fassung des Steuerungsprogramms 16 gesichert werden und gesicherte Instanzdaten 42' nach der Umschaltung der Ausführung des geänderten Steuerungsprogramms 16 zugrunde gelegt werden.

Mit dem Ansatz gemäß der Erfindung ergeben sich insbesondere die nachfolgend kursorisch aufgelisteten Vorteile:
● Ein Änderungsmanagement im laufenden Betrieb wird als vitale Anforderung unterstützt und ist integraler Bestandteil des Laufzeitinterpreters 40.
● Laufzeiten für die Bearbeitung der Automatisierungsfunktionen sind trotzdem optimal, weil die Automatisierungsfunktionen bei Verwendung des kombinierten Ansatzes im Maschinencode vorliegen. Gegenüber einer reinen interpretativen Lösung ergibt sich damit ein deutlicher Vorteil beim Durchsatz wegen signifikant geringerer Zykluszeiten.
● Eine Integration zusätzlicher Systemaufgaben in das Laufzeitsystem 18 wird gegenüber einer reinen Kompilierlösung oder auch einer reinen interpretativen Lösung durch das kombinierte Laufzeitsystem 18 wesentlich erleichtert. Eine Offenheit für zusätzliche Funktionen, insbesondere leittechnische Funktionen, ist gerade bei dem dadurch gegebenen Hybridlaufzeitsystem wegen der gegebenen Erweiterbarkeit des Laufzeitinterpreters 40 erfüllt.
● Eine Skalierbarkeit leittechnischer Funktionen ist durch eine logistische Auslieferung von Spezial-Laufzeitinterpretern 40 oder durch eine entsprechende Parametrierung des Laufzeitinterpreters 40 gegeben. Das kombinierte, dem Interpreter-Compiler-Modell gehorchende Laufzeitsystem ist besonders geeignet für Engineering-Systeme unter Verwendung von Programmiersprachen wie Continuous Function Chart (CFC) sowie Sequential Function Chart (SFC). Es unterstützt sowohl beim Laden von Steuerungsprogrammen 16 wie auch im laufenden Betrieb einer Gesamtanlage. Als Gesamtanlage wird dabei ein Automatisierungsgerät 10, ggf. ein Automatisierungssystem 28 mit mindestens einem davon umfassten Automatisierungsgerät 10, zusammen mit dem jeweiligen technischen Prozess 12 aufgefasst.
● Die Automatisierungshardware ist flexibel und breiter einsetzbar. Dies gilt insbesondere für speicherprogrammierbare Steuerungen, die bisher vornehmlich in der Fertigungsindustrie zum Einsatz kommen. Für Kunden der Hersteller von Leittechnik und Automatisierungstechnik ergeben sich Kostenvorteile bei der Beschaffung sowie logistische Vorteile in der Lagerhaltung der Automatisierungskomponenten. Speicherprogrammierbare Steuerungen können damit auch in der Prozessautomatisierung (DCS-Anwendungsbereich) erheblich an Bedeutung gewinnen. Das kombinierte Interpreter-Compiler-Laufzeitsystem bringt die Hersteller von speicherprogrammierbaren Steuerungen dem Ziel, eine durchgängige Hardware-Aufbautechnik für alle Anwendungen in der Fertigungs- und Prozessindustrie über alle Branchen anbieten zu können, einen wesentlichen Schritt näher.

Damit lässt sich die Erfindung kurz wie folgt darstellen: Es wird ein Verfahren zum Betrieb eines Automatisierungsgerätes, wobei ein vom Automatisierungsgerät 10 ausführbares Steuerungsprogramm 16 als Programmelement 32 zumindest Automatisierungsfunktionen 34 sowie eine eine Ablauffolge der Automatisierungsfunktionen 34 beschreibende Ablauffolgenbeschreibung 36 umfasst, angegeben, bei dem eine Auswertung und Umsetzung der Ablauffolgenbeschreibung 36 in eine für eine Verarbeitungseinheit 38 des Automatisierungsgerätes 10 verarbeitbare Form durch einen Laufzeitinterpreter 40 erfolgt.

## Patentansprüche

1. Verfahren zum Betrieb eines zur Ausführung eines Steuerungsprogramms (16) vorgesehenen Automatisierungsgerätes (10), wobei das Steuerungsprogramm (16) als Programmelemente (32) zumindest Automatisierungsfunktionen (34) sowie eine eine Ablauffolge der insbesondere in kompiliertem Code vorliegenden Automatisierungsfunktionen (34) beschreibende Ablauffolgenbeschreibung (36) umfasst, wobei eine Auswertung und Umsetzung der Ablauffolgenbeschreibung (36) in eine für eine Verarbeitungseinheit (38) des Automatisierungsgerätes (10) verarbeitbare Form durch einen Laufzeitinterpreter (40) erfolgt, **dadurch gekennzeichnet,**
**dass** im Zusammenhang mit einer Änderung des Steuerungsprogramms (16) von der Änderung betroffene Programmelemente (32) neben entsprechenden bisherigen Programmelementen (32) in einem für das Automatisierungsgerät (10) erreichbaren Speicher (14) hinterlegt werden,
**dass** eine Umschaltung zur zukünftigen Verwendung der von der Änderung betroffenen Programmelemente (32) bei der Ausführung des Steuerungsprogramms (16) erst erfolgt, wenn sämtliche von der Änderung betroffenen Programmelemente (32) im Speicher (16) vorliegen, und
**dass** mit der Änderung des Steuerungsprogramms (16) auch eine Ablauffolgenbeschreibung (36) erzeugt wird, die nach der Umschaltung die bisherige Ablauffolgenbeschreibung (36) ersetzt und die im Gegensatz zu der bisherigen Ablauffolgenbeschreibung (36), die ausschließlich Programmelemente (32) des bisherigen Steuerungsprogramms (16) referenziert, neben eventuell unverändert gebliebenen Programmelementen (32) des bisherigen Steuerungsprogramms (16) zumindest die von der Änderung betroffenen Automatisierungsfunktionen (34) referenziert.

2. Verfahren nach Anspruch 1, wobei die Umschaltung in der Verwendung einer die von der Änderung betroffenen Automatisierungsfunktionen (34) referenzierenden Ablauffolgenbeschreibung (36) durch den Laufzeitinterpreter (40) besteht.

3. Verfahren nach Anspruch 1 oder 2, wobei im Zusammenhang mit der Änderung des Steuerungsprogramms (16) Instanzdaten (42) des oder jedes Programmelementes (32) gesichert werden und wobei die gesicherten Instanzdaten (42) nach der Umschaltung der Ausführung des Steuerungsprogramms (16) zugrunde gelegt werden.

4. Verfahren nach Anspruch 1, 2 oder 3, wobei nach dem Hinterlegen von von der Änderung betroffenen Programmelementen (32) und vor der Umschaltung eine Benutzereingabe abgewartet wird.

5. Verfahren nach Anspruch 1, 2 oder 3, wobei nach der Umschaltung aufgrund einer entsprechenden Benutzereingabe eine Rückkehr zur Verwendung der ursprünglichen Automatisierungsfunktionen (34) durch Verwendung der die ursprünglichen Automatisierungsfunktionen (34) referenzierenden Ablauf folgenbeschreibung (36) durch den Laufzeitinterpreter (40) erfolgt.

6. Computerprogramm mit durch einen Computer ausführbaren Programmcodeanweisungen zur Implementierung des Verfahrens nach einem der Ansprüche 1 bis 5, wenn das Computerprogramm auf einem Computer ausgeführt wird.

7. Computerprogrammprodukt, insbesondere Speichermedium, mit einem durch einen Computer ausführbaren Computerprogramm gemäß Anspruch 6.

## Claims

1. Method for operating an automation appliance (10) provided for the purpose of executing a control program (16), wherein the control program (16) comprises, as program elements (32), at least automation functions (34) and also a running order description (36) describing a running order for the automation functions (34) which are available particularly in compiled code, said running order description (36) being evaluated and converted by a runtime interpreter (40) into a form which can be processed by a processing unit (38) in the automation appliance (10), **characterized in**
**that** in connection with a change in the control program (16), program elements (32) affected by the change are stored along with corresponding previous program elements (32) in a memory (14) which is available to the automation appliance (10),
**that** changeover for the purpose of future use of the program elements (32) affected by the change when the control program (16) is executed is not effected until all the program elements (32) affected by the change are present in the memory (16), and
**that** the change in the control program- (16) also prompts production of a running order description (36) which replaces the previous running order description (36) following the changeover and which, in contrast to the previous running order description (36), which references exclusively program elements (32) from the previous control program (16), references not only any program elements (32) from the previous control program (16) which have remained unchanged but also at least the automation functions (34) affected by the change.

2. Method according to Claim 1, wherein the changeover consists in the use of a running order description (36), referencing the automation functions (34) affected by the change, by the runtime interpreter (40).

3. Method according to Claim 1 or 2, wherein, in connection with the change in the control program (16), instance data (42) from the or each program element (32) are saved and wherein the saved instance data (42) are taken as a basis for execution of the control program (16) following the changeover.

4. Method according to Claim 1, 2 or 3, wherein a user input is awaited following the storage of program elements (32) affected by the change and before the changeover.

5. Method according to Claim 1, 2 or 3, wherein, following the changeover, an appropriate user input is taken as a basis for returning to the use of the original automation functions (34) by virtue of the use of the running order description (36), referencing the original automation functions (34), by the runtime interpreter (40).

6. Computer program having computer-executable program code instructions for implementing the method according to one of Claims 1 to 5 when the computer program is executed on a computer.

7. Computer program product, particularly storage medium, having a computer-executable computer program according to Claim 6.

## Revendications

1. Procédé pour faire fonctionner un appareil ( 10 ) d'automatisation prévu pour l'exécution d'un programme ( 16 ) de commande, dans lequel le programme ( 16 ) de commande comprend comme éléments ( 32 ) de programme au moins des fonctions ( 34 ) d'automatisation, ainsi qu'une description d'une succession de séquences décrivant une succession de séquences des fonctions ( 34 ) d'automatisation se présentant notamment en code compilé, dans lequel une exploitation et une transformation de la description ( 36 ) de la succession de séquences sous une forme pouvant être traitée par une unité ( 38 ) de traitement de l'appareil ( 10 ) d'automatisation, sont effectuées par un interprète ( 40 ) de durée d'exécution, **caractérisé,**
**en ce qu'**en relation avec une variation du programme ( 16 ) de commande, on mémorise, dans une mémoire ( 14 ) à laquelle l'appareil ( 10 ) d'automatisation peut avoir accès, des éléments ( 32 ) de programme concernés par la modification, outre des éléments ( 32 ) de programme correspondants existants jusqu'ici,
**en ce qu'**on n'effectue une conversion pour l'utilisation à venir des éléments ( 32 ) de programme concernés par la modification lors de l'exécution du programme ( 6 ) de commande que si l'ensemble des éléments ( 32 ) de programme concernés par la modification sont présents dans la mémoire ( 16 ), et
**en ce qu'**on produit par la modification du programme ( 16 ) de commande également une description ( 36 ) de succession de séquences qui remplace, après la conversion, la description ( 36 ) de succession de séquences existante jusqu'ici et qui, contrairement à la description ( 36 ) de la succession de séquences en vigueur jusqu'ici, référence exclusivement des éléments ( 32 ) du programme ( 16 ) de commande en vigueur jusqu'ici et référence, outre des éléments ( 32 ) restés inchangés du programme ( 16 ) de commande en vigueur jusqu'ici, au moins les fonctions ( 34 ) d'automatisation concernées par la modification.

2. Procédé suivant la revendication 1, dans lequel la conversion dans l'utilisation d'une description ( 36 ) de succession de séquences se référant aux fonctions ( 34 ) d'automatisation concernées par la modification est donnée par l'interprète ( 40 ) de durée d'exécution.

3. Procédé suivant la revendication 1 ou 2, dans lequel en relation avec la modification du programme ( 16 ) de commande, on s'assure de données ( 42 ) d'instance de l'élément ( 32 ) de programme ou de chaque élément ( 32 ) de programme et les éléments ( 42 ) d'instance dont on s'assure sont, après la conversion, à la base de la réalisation du programme ( 16 ) de commande.

4. Procédé suivant la revendication 1, 2 ou 3, dans lequel après la mémorisation d'éléments ( 32 ) de programme concernés par la modification et avant la conversion, on attend une entrée d'utilisateur.

5. Procédé suivant l'une des revendications 1 ou 3, dans lequel après la conversion, on effectue par l'interprète ( 40 ) de durée d'exécution, sur la base d'une entrée d'utilisateur adéquate, un retour à l'utilisation des fonctions ( 34 ) d'automatisation d'origine, en utilisant la description ( 36 ) de succession de séquences se référant aux fonctions ( 34 ) d'automatisation d'origine.

6. Programme informatique ayant des indications de code de programme, pouvant être réalisées par un ordinateur, pour la mise en oeuvre du procédé selon l'une des revendications 1 à 5, lorsque le programme informatique passe sur un ordinateur.

7. Produit de programme informatique, notamment support de mémoire, ayant un programme informatique pouvant être réalisé par un ordinateur suivant la revendication 6.
